# EUROPÄISCHE PATENTSCHRIFT

(11) **EP 3 105 577 B1**
(45) Veröffentlichungstag und Bekanntmachung des Hinweises auf die Patenterteilung: **13.01.2021**
(21) Anmeldenummer: 15709822.9
(22) Anmeldetag: 06.02.2015
(51) Int. Cl.: G01N 27/60, D21H 23/08, G01N 15/00, G01N 15/02

(54) **VERFAHREN UND VORRICHTUNG ZUR SCHNELLEN ANALYSE DER LADUNGSCHARAKTERISTIK UND DER GRÖSSENVERTEILUNG VON PARTIKELN**
METHOD AND DEVICE FOR QUICKLY ANALYSING THE CHARGING CHARACTERISTIC AND THE SIZE DISTRIBUTION OF PARTICLES
PROCÉDÉ ET DISPOSITIF D'ANALYSE RAPIDE DE LA CARACTÉRISTIQUE DE CHARGE ET DE LA RÉPARTITION DIMENSIONNELLE DES PARTICULES

(30) Priorität: 10.02.2014 DE 102014001759
(43) Veröffentlichungstag der Anmeldung: 21.12.2016
(73) Patentinhaber: Particle Metrix GmbH, 40668 Meerbusch (DE)
(72) Erfinder: WACHERNIG, Hanno, 86911 Diessen a. A. (DE); BÖCK, Margret, 40668 Meerbusch (DE)
(74) Vertreter: Kindermann, Peter
(86) Internationale Anmeldenummer: PCT/DE2015/000051
(87) Internationale Veröffentlichungsnummer: WO 2015/117593

(56) Entgegenhaltungen:
- WO-A1-2004/015410
- DE-A1- 19 731 184
- "ZetaProbe", INTERNET CITATION, Februar 2001 (2001-02), XP002418081, Gefunden im Internet: URL:http://www.colloidal-dynamics.com/docs /ZetaProbe_Data_Sheet.pdf [gefunden am 2007-02-01]

## Beschreibung

Das Stabilitätsverhalten von kolloidalen Stoffsystemen und Dispersionen ist häufig von der elektrostatischen Ladung an der Partikelgrenzfläche und der Partikelgrößenverteilung abhängig. Diese Partikel können geladen oder auch ungeladen sein. In letzterem Fall beträgt die Ladung dann 0 mV. Allerdings gibt es kaum ungeladene Partikel, denn diese werden meist durch die Zugabe irgendeines Stoffes geladen.

Die kurzreichweitige, jedoch starke Van-der-Waals - Anziehung zwischen den Teilchen zu verhindern ist die Kunst der Formulierung von stabilen kolloidalen Stoffsystemen und Dispersionen. Eine mit räumlich (sterisch) hindernden Makromolekülen oder elektrostatisch wirkenden Ionen besetzte Partikelgrenzfläche wirkt dieser Anziehung entgegen. Die ionischen Grenzflächen - Eigenschaften sind zum Beispiel als "Zetapotential" messbar. Die Ionen der Grenzfläche reagieren jedoch mit Ionen des sie umgebenden Fluids. Deshalb macht die reine Aussage über das Zetapotential selten Sinn ohne über pH-Wert, Polyelektrolyt- oder Salzumgebung, Viskosität, Dielektrizitätskonstante und Temperatur Angaben zu machen. Am aussagekräftigsten ist deshalb ein Titrationsverlauf, aufgetragen gegen einen oder mehrere der genannten Parameter. Die meisten ein Zetapotential bestimmenden Methoden, darunter insbesondere die optischen, eignen sich nicht für schnelle Titrationsarbeiten.

Zum Stand der Technik ist aus der DE 202006000403 U1 eine Vorrichtung für die Strömungspotentialmessung von Fasern und Partikeln in Suspensionen bekannt. Diese Vorrichtung enthält eine Messzelle mit Sieb und Elektroden und ein Absaugrohr, wobei mindestens zwei in der Vorrichtung integrierte Vakuumpumpen separat mit jeweils einem Vakuumgefäß über Leitungen verbunden sind. Es ist die Aufgabe dieser Erfindung, eine gut transportable und kostengünstige Vorrichtung für die Strömungspotentialmessung von Fasern und Partikeln in Suspensionen, insbesondere eine Vorrichtung zur Bestimmung des Zetapotentials der Teilchen von faser- bzw. partikelhaltigen wässrigen Suspensionen durch Messung des Strömungspotentials und einer daraus erfolgenden Berechnung des Zetapotentials mittels einer empirischen Formel vorzuschlagen. Die Leistungsfähigkeit und Größe der Vakuumpumpe soll aus Portabilitäts- und Kostengründen geringer sein, wobei das Vakuum innerhalb einer Halbperiode gleichbleibend und augenblicklich auf den Sollwert einstellbar sein soll. Die meisten Strömungspotential - Messgeräte für kolloidale Partikel und Polyelektrolyte (0,5 nm - 300 µm) basieren auf einer zylindrischen Messzelle aus einem nichtleitenden Material mit möglichst schwach geladener Oberfläche und einem Verdrängerkolben desselben Materials. Das am häufigsten verwendete Material hierzu ist PTFE. Dieses Prinzip wurde zum ersten Mal von W.F. Gerdes 1966 veröffentlicht. Die Laborversion ist meist oben offen, wobei hier nach der Reinigung 10 mL Probe von typischerweise 1 Volumenprozent eingefüllt werden. Auch Titrationslösungen werden während des Messvorgangs von oben zugeträufelt. Die elektronische Signalverarbeitung erfolgt entweder dadurch, dass eine Ladungsverschiebung als Strom gemessen und in ein Potential umgerechnet wird, oder es erfolgt eine reine Potentialmessung. In einer Monitorversion, bei der nur das Strömungspotential im Durchfluss gemessen wird, ist der oben erwähnte Zylinder geschlossen, damit die Dispersion den Messzylinder entsprechend durchströmen kann.

Aus der den Oberbegriff des Patentanspruchs 1 bildenden Druckschrift DE 197 31 184 A1 ist ein Verfahren und eine Vorrichtung zur analytischen Überwachung eines Bades zur galvanotechnischen Behandlung von Substratoberflächen bekannt, wobei ein Messgefäß, ein Kolben mit Antrieb, zwei Elektroden mit Verstärker zum Messen und zur Weiterverarbeitung der zwischen den Elektroden entstandenen Spannung sowie eine Titrationseinheit vorgesehen sind.

Ferner offenbart die Literaturstelle "Zeta-Probe", Februar 2001, XP002418081, (Internet: URL: http://www.collodial-dynamics.com/docs/ZetaProbe Data Sheet.pdf) von Collodial Dynamics, LLC, eine Vorrichtung und ein Verfahren zum Messen eines Zeta-Potentials, einer Beweglichkeit, einer Leitfähigkeit, eines ph-Wertes, einer Temperatur sowie eines isoelektrischen Punktes (IEP).

Aus der, auf die Anmelderin zurückgehenden, DE 10 201 1 117 681 B1 sind ferner ein Verfahren und eine Vorrichtung zur Messung des Grenzschichtpotentials von Partikeln und Makromolekülen in flüssigen polaren Medien bekannt. In dieser Druckschrift soll eine Messvorrichtung geschaffen werden, die preiswert ist und wegen der Verschleppungsgefahr leicht durch eine neue ersetzt werden kann. Es soll ferner ein Betrieb mittels einer Pumpe oder einer Druckvorrichtung möglich sein, wobei die Messkapillare weder mit der Pumpe noch mit der Druckvorrichtung in Berührung kommt. Die Probenmenge sollte möglichst gering sein und der Anwendungsbereich in Bezug auf die Partikelgröße der Probe sollte möglichst weit sein. Die Probe sollte erhalten bleiben.

Der vorliegenden Erfindung liegt demgegenüber die Aufgabe zugrunde, ein Verfahren und eine Vorrichtung anzugeben, bei der eine Reinigung eines Messgefäßes vermieden oder vereinfacht werden kann sowie weitere Parameter der Proben schnell und einfach gemessen werden können.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 5 gelöst.

In den abhängigen Ansprüchen sind weitere vorteilhafte Ausgestaltungen der Erfindung gekennzeichnet.

Die erfindungsgemäße Vorrichtung wird im Folgenden näher beschrieben.

Nachfolgend wird eine räumliche Darstellung einer erfindungsgemäßen Vorrichtung beschrieben. Als äußere Begrenzung weist die Vorrichtung ein Gehäuse auf, dem eine zylinderförmige äußere Becherhalterung für ein Messgefäß vorgelagert ist. Für das verwendete Messprinzip ist es erforderlich, dass die zu untersuchende Suspension einer oszillierenden Bewegung mittels eines Stößels ausgesetzt wird. Dieser Stößel ist ein dünner zylinderförmiger Körper, der in die äußere Becherhalterung eintaucht. Die äußere Becherhalterung ist beidseitig in einer u -förmigen, am Gehäuse befestigten, Halterung herein- und herausschiebbar gelagert. Um für den Vorgang des Hinein- und Hinausschiebens der Becherhalterung die Verbindung zu dem Stößel lösen zu können ist eine Kupplung vorgesehen, wobei die Hubbewegung des Stößels mittels eines Stößel-Hebelarms erfolgt. Die Kupplung kann magnetisch oder elektromagnetisch betätigbar sein.

An der Rückseite der äußeren Becherhalterung befindet sich eine Mess-Sonde zur Messung der Partikelgröße auf der Basis einer Laser-Optik. Bei der Entfernung der äußeren Becherhalterung kann die Mess-Sonde wegbewegt werden. Die pH-Wert-Messsonde auf der linken Seite der äußeren Becherhalterung kann für diesen Fall mittels einer Sondenhalterung ebenfalls entfernt werden.

Die dosierte, und messtechnisch erfassbare, Zugabe von Titrationslösungen erfolgt über eine von zwei integrierten Titrationspumpen aus einem der beiden Vorratsbehälter.

Nachfolgend wird eine räumliche Darstellung des Grundkörpers der erfindungsgemäßen Vorrichtung beschrieben. Der, in dem Gehäuse verborgene, Grundkörper besitzt an der Rückseite einen, zum Antrieb der oszillierenden Bewegung des Stößels benötigten, zylinderförmigen Antrieb, der mittels eines Pleuels und eines, nicht näher bezeichneten, Übertragungselements aus der rotatorischen Bewegung des Antriebs die Hubbewegung des Stößel-Hebelarms und damit des Stößels erzeugt. Über die Drehzahl des Antriebs lässt sich die Frequenz der Hubbewegung stufenlos einstellen. Mittels eines Hub-Verstellelements kann hierbei auch zusätzlich die Amplitude der Hubbewegung, getrennt von der Hubfrequenz, stufenlos in einem wünschenswerten Bereich verstellt werden. Mittels eines Stellelements kann der Einsatzpunkt, ab dem das Hub-Verstellelement wirkt, ebenfalls verstellt werden. Dies ist notwendig um den Hub des Stößels an unterschiedliche Ausgestaltungen des Messgefäßes und des Stößel-Mantels anpassen zu können. Eine Platine mit dem Elektronik-Teil zur Messwerterfassung ist an der Rückseite der vorderen Begrenzungswand des Grundkörpers angebracht. Dieses Elektronik-Teil dient der Messwerterfassung für das Partikelpotential, wobei im Wesentlichen das Strömungspotential, bzw. Zetapotential, und die Leitfähigkeit erfasst und verstärkt werden.

Das Ausgangssignal des Elektronik-Teils wird einer, nicht näher bezeichneten, Hauptplatine zugeführt, die einerseits die Steuerbefehle des Bedieners an die erfindungsgemäße Vorrichtung und andererseits die gewünschten Messsignale an die vorhandene Anzeige-Einheit liefert. Als Anzeige-Einheit kann ein Tablet-PC oder ein anderer PC dienen.

Nachfolgend wird das Funktionsprinzip der Vorrichtung beschrieben. Als umfassendes Bauelement stelle man sich hierbei die äußere Becherhalterung im Querschnitt vor. Diese Becherhalterung beinhaltet ein zylindrisches Messgefäß. Das Messgefäß ist mit einem unteren Zapfen in die äußere Becherhalterung eingesetzt und mittels einer Einrast-Nase gegen eine Verdrehung gesichert. Das Messgefäß ist ein Einweg-Artikel und mittels eines bestimmten RFID-Codes gekennzeichnet. In das zylindrische Messgefäß ist der ebenfalls zylindrische Stößel mit dem Stößel-Kern und seinem Stößel-Mantel eingetaucht. Der Stößel ist mittels der, hier im Querschnitt gezeigten Magnetspulen der Kupplung mit dem Stößel-Hebelarm des Grundkörpers verbunden und trägt einen Stößel-Mantel, der ebenfalls als Einweg-Artikel zur besonderen Kennzeichnung einen RFID-Code aufweist.

Der RFID-Code für das jeweils verwendete Messgefäß und der RFID-Code für den jeweils verwendeten Stößel-Mantel liegen sich gegenüber, sodass sichergestellt werden kann, dass beide Einweg-Artikel zusammen datentechnisch erfasst werden. Auf diese Weise sind der Stößel-Mantel und das zugehörige Messgefäß unverwechselbar mit den zugehörigen Kalibrierparametern verbunden.

Als Material für den Stößel-Mantel und das Messgefäß wird anstelle des bisher gebräuchlichen Teflon von der Firma Dupont das Material Tefzel verwendet. Tefzel zeichnet sich dadurch aus, dass es einerseits ebenfalls hinsichtlich seiner Oberflächenladung neutral ist, jedoch härter und stabiler als Teflon.

Dieses Material Tefzel ermöglicht zudem eine kleinere Probenmenge als bisher, da aus Gründen seiner Festigkeit kleinere Messgefäße und Stößel gefertigt werden können. Während bisher als Probenmenge 5 -10 mL als unterste Grenze galten, sind jetzt Probenmengen von 0,5 bis 1 mL möglich.

Zwischen der inneren Wandung des Messgefäßes und der äußeren Fläche des Stößel-Mantels ist die zu analysierende Suspension.

Die Spaltbreite zwischen der inneren Wandung des Messgefäßes und der äußeren Fläche des Stößel-Mantels kann durch eine entsprechende Dimensionierung der Gefäß- und Stößelmaße so verändert werden, dass nach Wunsch ein räumlich weiterer Spalt oder ein räumlich engerer Spalt entsteht. Dies hat zur Folge, dass bei einem räumlich weiteren Spalt Dispersionen mit gröberen Partikeln messbar sind, während bei einem räumlich engeren Spalt die Messempfindlichkeit erhöht werden kann. Letzteres ist für den Fall bedeutsam, wenn zum Beispiel bei Vorliegen einer hohen Leitfähigkeit einer Dispersion das Messsignal des Partikelpotentials abgeschwächt wird. Denn das Messsignal des Partikelpotentials ist - innerhalb gewisser Grenzen - proportional zur Geschwindigkeit der Messflüssigkeit im Spalt. Eine Erhöhung der Geschwindigkeit hat also eine Signalverstärkung für das Partikelpotential zur Folge.

Ein Teil der Partikel der zu analysierenden Suspension ist an der Oberfläche der, durch die beiden zylindrischen Mantelflächen gebildeten, Zellwand immobilisiert. Durch die Volumen-Änderungen der oszillierenden Kolbenbewegung des Stößels wird die mobile Ladungswolke der Doppelschicht an den immobilisierten Partikeln rauf und runter geschoben. Die oszillierende lonenwolke erzeugt so eine alternierende Spannung entsprechend einem Strömungspotential an den Elektroden. Diese Spannung ist proportional zum Zetapotential kalibriert.

Partikelgrenzflächenpotentiale, so auch das Strömungspotential, die hier gemessen werden, stehen für das Maß elektrostatischer Abstoßung zwischen Partikeln und reagieren auf den pH-Wert, die Leitfähigkeit, Polyelektrolytumgebung (Konzentration und Menge), die Viskosität und die Dielektrizitätskonstante der Probe, wobei die beiden letzten Parameter temperaturabhängig sind. Einer dieser Parameter kann ein Stoffsystem schnell zum Kippen bringen. So zeigt nur eine Titration nach den genannten Parametern ein charakteristisches Verhalten der Probe in ihrer Umgebung. In das Messgefäß, bzw. die Suspension, führt gleichzeitig eine Mess-Sonde für die Partikelgröße, die auf einer Laser-Optik basiert. Anstelle der Größen- oder pH-Sonde kann eine, nicht näher bezeichnete, Viskositätssonde eingesetzt werden, falls nicht sogar zusätzlich Platz für eine Viskositätssonde gefunden werden kann. Meist werden jedoch nicht alle Messgrößen gleichzeitig gebraucht.

Auf der anderen Seite wird mittels einer pH-Wert-Messsonde und eines eingebauten Temperatur-Sensors einerseits der pH-Wert der Suspension und andererseits deren Temperatur ermittelt. Über eine Leitung ist die gezielte Zugabe von Reagenzien möglich. Über eine Stößel-Heizung ist die gezielte Temperatur-Einstellung einer Probe möglich. Nachgeschaltet zu den beiden Elektroden ist ein Elektronik-Teil für die Signalverstärkung des Partikelpotentials und für die Leitfähigkeitsmessung angebracht. Die Bedienung der erfindungsgemäßen Vorrichtung ist intuitiv Tablet-PC geführt und beinhaltet eine Titrations-Automatik. Eine Ladungstitration schafft rasch Klarheit, auf welche Parameter die Probe besonders reagiert. In kurzer Zeit ermittelt man den iso-elektrischen Punkt und erhält gleichzeitig Aussagen über die Ladungsdichte der Probe und über deren stabile Zonen, wo keine oder nur mäßig stark Reaktionen der Partikel mit der zu-titrierten Flüssigkeit stattfinden. Gleichzeitig werden der pH-Wert, die Leitfähigkeit und die Temperatur, und die Viskosität, mit gemessen.

Insgesamt stellt die erfindungsgemäße Vorrichtung ein Multimeter-Messgerät dar. Hierbei können gleichzeitig von einer Probe gemessen werden:
1. der pH-Wert
2. die Leitfähigkeit
3. die Temperatur
4. die Partikelgröße
5. das Strömungspotential
6. das Volumen der Probe nach der Zugabe von Reagenzien.
7. die Viskosität

Die Parameter 1, 2, 3 und 6 sind dabei veränderbar, bzw. beeinflussbar. Die Parameter 4 und 5 und 7 sind feste, bzw. unveränderbare Messgrößen.

Bei kinetischen Versuchen (ohne Zugabe von Titrationsflüssigkeit), bei denen sich die Temperatur ändern kann, oder gezielt geändert wird, kann die Änderung der Messsignale 4 und 5 zurückgeführt werden auf Änderungen des Verhältnisses zwischen der Viskosität und der Dielektrizitätskonstante, sofern die Temperaturabhängigkeit der Viskosität und der Dielektrizitätskonstante in Tabellenform in der Software vorliegen. Bei Vorhandensein einer Viskositäts-Messsonde kann die Viskosität direkt eingelesen werden.

Alternativ zu dem Einsatz einer Viskositäts-Messsonde gibt es 2 weitere Möglichkeiten der Messung der Viskosität.

Die erste Möglichkeit besteht darin, die Phasenverschiebung des Zetapotentials gegenüber der Referenz als Maß für die Viskosität zu ermitteln.

Die zweite Möglichkeit besteht darin, das Drehmoment für den Stößelantrieb als Maß für die Viskosität einzusetzen.

Beide Messmethoden sind jeweils nach dem zu messenden Viskositätsbereich oder jeweils nach den Anforderungen an die Messgenauigkeit einzusetzen.

Wird durch die Zugabe bestimmter Volumina von Titrationslösungen (zum Beispiel von Alkohol) zur wasserbasierten Probe die Dielektrizitätskonstante gezielt geändert, können wiederum die Messsignale 4 und 5 in Abhängigkeit von der Dielektrizitätskonstante aufgetragen werden, sofern eine Tabelle für die Mischung von zum Beispiel Wasser mit Alkohol vorher in der Software angelegt wurde. Durch gleichzeitiges Erfassen der Leitfähigkeit ergeben sich wiederum ein oder mehrere dreidimensionale Darstellungen in Diagrammen.

Nachfolgend wird eine räumliche Darstellung von graphischen Zusammenhängen in 3 Koordinaten beschrieben. Hier ist beispielhaft der 3-dimensionale Zusammenhang der 3 Parameter pH-Wert, Zetapotential, und der Leitfähigkeit beschrieben. Ferner sind entsprechende zweidimensionale Projektionen auf Parameter-Bezugsflächen möglich.

Nachfolgend wird ein Verfahrensablauf beschrieben.

Die äußere Becherhalterung ist mit einer Einrast-Nase für das Messgefäß im Querschnitt vorstellbar, wobei eine Plus-Elektrode und eine Minus-Elektrode die Anordnung vervollständigen.

Die Lage vor dem vertikalen Einsetzen des Messgefäßes mit dem im Messgefäß befindlichen Stößel und dem Stößel-Mantel, in die Becherhalterung ist derart, dass der Stößel-Mantel von der Suspension als Probe umgeben wird. Das Messgefäß und der Stößel-Mantel sind als Einweg-Artikel ausgebildet. Die Verbindung zu der erfindungsgemäßen Vorrichtung wird durch die Kupplung hergestellt.

Der Stößel-Kern ist mit seiner innen liegenden Stößel-Heizung und der, mit dem Stößel-Hebelarm verbundenen, Kupplung 4 vorstellbar. Beispielhaft ist hier die, in die Suspension eintauchende Mess-Sonde für die Partikelgröße vorstellbar. Die pH- und Temperaturwert-Messsonde mit dem eingebauten Temperatur-Sensor auf der anderen Seite wird von der Leitung für die Zugabe von Reagenzien ergänzt. Nach dem Zusammensetzen des Messgefäßes mit seinen innen liegenden Bestandteilen und der äußeren Becherhalterung wird der Stößel-Mantel mittels des Stößel-Hebelarms vertikal auf- und ab bewegt. Hierdurch erfolgt die Messung des Zetapotentials. Danach werden die pH-Wert-Messsonde mit ihrem Temperatur-Sensor und die Mess-Sonde für die Partikelgröße in die Proben-Flüssigkeit eingebracht.

Zudem kann mittels der Dosierpumpen 6 Titrations-Flüssigkeit zusätzlich in die Proben-Flüssigkeit zugegeben werden.

Nach der Beendigung und Aufzeichnung des Messvorgangs erfolgt die nächste Messung durch das Entfernen der beteiligten Bestandteile und das Vorbereiten neuer Einweg-Artikel.

Diese hier geschilderten Vorgänge können auch automatisch gesteuert erfolgen, wobei die Verwendung der jeweiligen Sonden und deren Einsatz von einem Roboter gesteuert werden. Ebenso kann der Einsatz der jeweils benötigten Einweg-Artikel und die Zufuhr der jeweiligen Proben-Flüssigkeit und eventuell benötigter Titrations-Flüssigkeiten automatisch gesteuert erfolgen. Die Aufzeichnung der erzielten Messergebnisse wird ebenfalls automatisch erfasst und aufgezeichnet.

Die Steuerung der komplexen Bewegungsvorgänge und die Signalverarbeitung der verwendeten Sensoren erfordern ein spezielles Steuerungsprogramm.

## Patentansprüche

1. Vorrichtung zur schnellen Analyse der Ladungscharakteristik und der Größenverteilung von Partikeln in Form von einzelnen Proben mit einem Messgefäß, einem Kolben mit Antrieb, zwei Elektroden mit Verstärker zum Messen und zur Weiterverarbeitung der zwischen den Elektroden entstandenen Spannung sowie einer Titrationseinheit,
**dadurch gekennzeichnet, dass**
a) eine vom Gehäuse entfernbare äußere Becherhalterung ein einsetzbares Messgefäß als Einweg-Artikel und einen in das Messgefäß oszillierend eintauchenden Stößel mit einem Stößel-Mantel aufweist, der ebenfalls als Einweg-Artikel ausgebildet ist, wobei das Messgefäß einen RFID-Code und der Stößel einen Stößel-Mantel mit einem RFID-Code aufweist,
b) der Stößel mittels einer Kupplung mit einem, die Hubbewegungen verursachenden Stößel-Hebelarm verbunden ist, wobei die Amplitude und die Frequenz der Hubbewegung getrennt einstellbar sind,
c) in das Messgefäß eine Mess-Sonde für die Partikelgröße, die Viskosität, eine pH-Wert-Messsonde, und ein Temperatur-Sensor hineinreichen, und
e) ein Bedienmittel vorgesehen ist, das eine Bedienung entsprechend dem gewünschten Analyse-Programm und die Ausgabe der ermittelten Analyse-Werte in der gewünschten Ausgabe-Form ermöglicht.

2. Vorrichtung nach Anspruch 1, **dadurch gekennzeichnet,**
**dass** der Stößel eine stufenlos einstellbare Heizung aufweist, und dass zwischen den Elektroden zusätzlich zur Messung des Partikelpotentials die Leitfähigkeit der Probe erfasst wird.

3. Vorrichtung nach Anspruch 1 oder 2, **dadurch gekennzeichnet,**
**dass** der RFID-Code des Messgefäßes und der RFID-Code des Stößel-Mantels im unmittelbaren Nahbereich angeordnet sind.

4. Vorrichtung nach Anspruch 1, 2 oder 3, **dadurch gekennzeichnet, dass** das Bedien-Mittel Tablet-PC geführt ist und eine Titrations-Automatik beinhaltet.

5. Verfahren zur schnellen Analyse der Ladungscharakteristik und der Größenverteilung von Partikeln in Form von einzelnen Proben mit den folgenden Merkmalen:
a) in eine äußere Becherhalterung wird als Einweg-Artikel ein einsetzbares Messgefäß gesetzt und die Becherhalterung wird am Gehäuse befestigt,
b) in das Messgefäß wird ein Stößel gesetzt und mittels einer Kupplung an einem eine Hubbewegung verursachenden Stößel-Hebelarm des Grundkörpers befestigt,
wobei der Stößel mit einem Stößel-Mantel umhüllt wird, der ebenfalls als Einweg-Artikel ausgeführt ist, wobei die Amplitude und die Frequenz der Hubbewegung getrennt einstellbar sind,
c) in das Messgefäß wird die zu untersuchende Probe gegeben und es werden eine Mess-Sonde für die Partikelgröße, eine pH-Wert-Messsonde mit integriertem Temperatur-Sensor und eine Leitung für die Zugabe von Reagenzien in den Öffnungsbereich des Messgefäßes verschwenkt,
d) bei Bedarf erfolgt eine dosierte und messtechnisch erfasste Zugabe von Titrationslösung mittels einer Titrationspumpe,
e) es erfolgen weiter eine Tablet-PC geführte Bedienung entsprechend dem gewünschten Analyse-Programm und die Ausgabe der ermittelten Analyse-Werte in der gewünschten Ausgabe-Form.

6. Verfahren nach Anspruch 5, **dadurch gekennzeichnet,**
**dass** das Messgefäß einen RFID-Code und der Stößel einen Stößel-Mantel mit einem RFID-Code aufweist.

7. Verfahren nach Anspruch 5 oder 6, **dadurch gekennzeichnet, dass** der Stößel eine stufenlos einstellbare Heizung aufweist.

8. Verfahren nach einem der Ansprüche 5 bis 7, **dadurch gekennzeichnet, dass** die Bedienung der Vorrichtung Tablet-PC geführt ist und eine Titrations-Automatik beinhaltet.

## Claims

1. Device for quickly analysing the charge characteristic and the size distribution of particles in the form of individual samples with a measuring vessel, a piston with drive, two electrodes with amplifier for measurement and for further processing of the voltage produced between the electrodes, and also a titration unit, **characterized in that**
a) an outer trap holder, which is removable from the housing, has an insertable measuring vessel as a disposable article and a plunger that dips into the measuring vessel in an oscillating manner and has a plunger casing, which is likewise embodied as a disposable article, wherein the measuring vessel has an RFID code and the plunger has a plunger casing with an RFID code,
b) the plunger is connected by means of a coupling to a plunger lever arm that causes the stroke of movements, wherein the amplitude and the frequency of the stroke movement are adjustable separately,
c) a measuring probe for the particle size and the viscosity, a pH measuring probe and a temperature sensor extend into the measuring vessel, and
e) an operating means is provided, which enables operation according to the desired analysis program and the outputting of the determined analysis values in the desired form of output.

2. Device according to Claim 1, **characterized in that** the plunger has a continuously variably adjustable heating, and **in that** the conductivity of the sample is detected between the electrodes in addition to the measurement of the particle potential.

3. Device according to Claim 1 or 2, **characterized in that** the RFID code of the measuring vessel and the RFID code of the plunger casing are arranged directly in close proximity.

4. Device according to Claim 1, 2 or 3, **characterized in that** the operating means is controlled via tablet PC and includes an automatic titration mechanism.

5. Method for quickly analysing the charge characteristic and the size distribution of particles in the form of individual samples, having the following features:
a) an insertable measuring vessel as a disposable article is placed into an outer cup holder and the cup holder is secured to the housing,
b) a plunger is placed into the measuring vessel and secured by means of a coupling to a plunger lever arm of the main body, said plunger lever arm causing a stroke movement, wherein the plunger is enclosed by a plunger casing, which is likewise embodied as a disposable article, wherein the amplitude and the frequency of the stroke movement are adjustable separately,
c) the sample to be examined is passed into the measuring vessel and a measuring probe for the particle size, a pH measuring probe with integrated temperature sensor and a line for adding reagents are pivoted into the opening region of the measuring vessel,
d) as necessary, titration solution is added in a metered and metrologically detected manner by means of a titration pump,
e) operation controlled via tablet PC in accordance with the desired analysis program and outputting of the determined analysis values in the desired form of output are furthermore carried out.

6. Method according to Claim 5, **characterized in that** the measuring vessel has an RFID code and the plunger has a plunger casing with an RFID code.

7. Method according to Claim 5 or 6, **characterized in that** the plunger has a continuously variably adjustable heating.

8. Method according to any of Claims 5 to 7, **characterized in that** the operation of the device is controlled via tablet PC and includes an automatic titration mechanism.

## Revendications

1. Dispositif d'analyse rapide de la caractéristique de charge et de la répartition dimensionnelle de particules sous forme d'échantillons individuels, comportant un récipient gradué, un piston équipé d'un entraînement, deux électrodes équipées d'amplificateurs pour la mesure et le traitement ultérieur de la tension générée entre les électrodes et une unité de titration, **caractérisé en ce que**
a) un support de bêcher extérieur, qui peut être retiré du boîtier, comporte un récipient gradué insérable en tant qu'article jetable et un poussoir qui plonge de manière oscillante dans le récipient gradué, avec une enveloppe de poussoir qui est également conçue en tant qu'article jetable, dans lequel le récipient gradué présente un code RFID et le poussoir comporte une enveloppe de poussoir présentant un code RFID,
b) le poussoir est relié au moyen d'un accouplement à un bras de levier de poussoir qui provoque les mouvements de va-et-vient, dans lequel l'amplitude et la fréquence du mouvement de va-et-vient peuvent être réglées séparément,
c) un capteur de taille de particules, de viscosité, de pH et de température est placé dans le récipient gradué ; et
e) il est prévu un moyen de commande qui permet d'effectuer une commande selon le programme d'analyse souhaité et de fournir en sortie les valeurs d'analyse déterminées sous la forme de sortie souhaitée.

2. Dispositif selon la revendication 1, **caractérisé en ce que** le poussoir comporte un système de chauffage réglable en continu, et **en ce que** la conductivité de l'échantillon est détectée entre les électrodes en plus de la mesure du potentiel des particules.

3. Dispositif selon la revendication 1 ou 2, **caractérisé en ce que** le code RFID du récipient gradué et le code RFID de l'enveloppe du poussoir sont disposés à proximité immédiate.

4. Appareil selon la revendication 1, 2 ou 3, **caractérisé en ce que** le moyen de commande est une tablette PC et contient un système de titrage automatique.

5. Procédé d'analyse rapide de la caractéristique de charge et de la répartition dimensionnelle de particules sous forme d'échantillons individuels, présentant les caractéristiques suivantes :
a) un récipient gradué insérable est placé dans un support de bêcher extérieur en tant qu'article jetable et le support de bêcher est fixé au boîtier,
b) un poussoir est placé dans le récipient gradué et fixé au moyen d'un accouplement à un bras de levier de poussoir qui provoque un mouvement de va-et-vient du corps de base, dans lequel le piston est enveloppé dans une enveloppe de poussoir, qui est également réalisée sous la forme d'un article jetable, dans lequel l'amplitude et la fréquence du mouvement de va-et-vient peuvent être réglées séparément,
c) l'échantillon à analyser est placé dans le récipient gradué et une sonde de mesure de taille de particule, une sonde de mesure du pH avec capteur de température intégré et une conduite pour l'ajout de réactifs sont amenées à pivoter dans la zone d'ouverture du récipient gradué,
d) si nécessaire, une solution de titration est ajoutée de manière dosée au moyen d'une pompe de titration et détectée par une technique de mesure,
e) une opération guidée par tablette PC selon le programme d'analyse souhaité et la fourniture en sortie des valeurs d'analyse déterminées sont effectuées sous la forme de sortie souhaitée.

6. Procédé selon la revendication 5, **caractérisé en ce que** le récipient gradué présente un code RFID et **en ce que** le poussoir comporte une enveloppe de poussoir présentant un code RFID.

7. Procédé selon la revendication 5 ou 6, **caractérisé en ce que** le poussoir comporte un chauffage réglable en continu.

8. Procédé selon l'une des revendications 5 à 7, **caractérisé en ce que** le fonctionnement du dispositif est guidé par tablette PC et comprend un système de titrage automatique.
